# EUROPEAN PATENT SPECIFICATION

(11) **EP 0 902 168 B1**
(45) Date of publication and mention of the grant of the patent: **02.04.2003**
(21) Application number: 98307293.5
(22) Date of filing: 09.09.1998
(51) Int. Cl.: F01K 23/06, F02G 5/02

(54) **Method and arrangement for a combi power plant**
Verfahren und Anordnung für Kombikraftwerk
Procédé et dispositif pour centrale combinée

(30) Priority: 15.09.1997 FI 973690
(43) Date of publication of application: 17.03.1999
(73) Proprietor: Wärtsilä NSD OY AB, 00530 Helsinki (FI)
(72) Inventor: Hägglund, Thomas, 65410 Sundom (FI)
(74) Representative: Newby, Martin John

(56) References cited:
- PATENT ABSTRACTS OF JAPAN vol. 011, no. 175 (M-596), 5 June 1987 (1987-06-05) & JP 62 007905 A (MITSUBISHI HEAVY IND LTD), 14 January 1987 (1987-01-14)

## Description

This invention relates to a method in accordance with the preamble of claim 1 for improving the total efficiency rate of a combi power plant and to a combi power plant for putting the method into practice.

In this specification the term "large diesel engine" refers to such engines that may be used, for instance, as the main propulsion engine or an auxiliary engine of a ship or in a power plant, for the production of heat and/or electricity.

In addition to providing mechanical energy, large diesel engines also produce considerable amounts of waste heat. For this reason, large diesel engines are especially used as prime movers where a primary circuit provides the mechanical energy produced by the engine which can be transformed into electricity by means of an electric generator and where a secondary circuit provides waste heat which can be recovered to produce steam for use either in a steam turbine, where additional electricity can be produced by means of an electric generator, or directly, for instance for a variety of purposes in process industries. In this specification the term "combi power plant" refers to these kinds of power plants.

A basic problem associated with energy production of the kind referred to above is that the temperature of the exhaust gases produced by the engine is relatively low in the secondary circuit. When the recovered heat energy is utilised for steam production, the relatively low exhaust gas temperatures limit the temperature of the steam. For this reason the efficiency of such a steam turbine is relatively low.

Several different solutions to the above problem are known. One solution is to arrange for the exhaust gases to be additionally burned or combusted so as to increase their temperature before they are supplied to a turbo device. This solution, however, is relatively complicated and expensive and requires additional fuel to be supplied for the additional burning.

Another known solution to the problem is presented in FI-A-89969 (which corresponds to US-A-5133298). According to this known solution the recovery of the waste energy occurs in two phases. In the first phase, before the exhaust gases of the engine are supplied to the second phase turbo device, they are led into a first exhaust gas boiler where part of the heat energy is recovered. If the engine is not operated at full power, part of the exhaust gases may be arranged to by-pass the first exhaust gas boiler. However the exhaust gas boiler forms an integral part of the exhaust pipe upstream of the turbo device and thus the cost of implementing this solution is increased. In addition the solution takes no account of the effective loss caused by the exhaust gas boiler and the by-pass pipe and the affect on the production of energy in the primary circuit.

Also, according to the solution disclosed in FI-A-94895, all the exhaust gases from the diesel engine are first supplied to an exhaust gas boiler for steam production before being supplied to the turbo device. Although it is thus possible to increase the total efficiency rate for the production of electricity, the arrangement is awkward and expensive to put into practice, since it requires substantial modifications to be made upstream of the turbo device. For the main part the same holds also for the solution disclosed in JP-A-62-7905.

An aim of the present invention is to improve the total efficiency rate for the production of energy in a combi power plant, based on one or more diesel engines, by providing a solution which is simple and easy to put into practice, which provides a combi power plant which can be constructed relatively simply and relatively cheaply, and in which the drawbacks of known techniques are substantially eliminated.

According to one aspect of the present invention there is disclosed a method of operating a combi power plant as claimed in the ensuing claim 1. In this specification the refining of steam refers especially to increasing the temperature of saturated and/or superheated steam by heating the steam further. In this respect the exhaust gas boiler means serves as and may be regarded as a superheater.

The temperature of the by-passed exhaust gases substantially corresponds to the temperature of the exhaust gases upstream of the turbo device and so is significantly higher than the exhaust gases downstream of the turbo device. In addition heat transfer from the by-passed exhaust gases into the steam produced in the exhaust gas boiler unit(s) occurs effectively under the pressure of the exhaust gas flow. Thus the achieved increase of temperature in the produced steam increases substantially the output rate of the steam turbine. On the other hand, since the proportion of exhaust gases in the by-passed exhaust gas flow taken from the exhaust gases of an engine upstream of its associated turbo device is relatively small in comparison with known solutions and since the solution does not cause pressure loss in the main flow of the exhaust gases, the effect on the output of the turbo device and thus on the energy production in the primary circuit of the engine is relatively small, especially in comparison with the increase in the output rate, which is obtained by means of the arrangement from the secondary circuit for the production of steam and the generation of electricity. Thus the total efficiency rate can essentially be improved by means of the invention.

Since the by-passed exhaust gas flow does not cause a substantial pressure loss in the main exhaust gas flow fed to the turbo device itself, a greater pressure loss may be allowed in the exhaust gas boiler means in comparison with a solution in which the exhaust gas boiler means is located in between the engine and the turbo device. As a consequence, the speed of the exhaust gas flow through the exhaust gas boiler means can be increased, which enables a self-purifying solution. In addition, by means of the method according to the invention, it is possible to decrease the size of the exhaust gas boiler means and, thus, the costs.

The method according to the invention is also simple to put into practice, since the by-pass arrangement can relatively easily be arranged without substantial changes to the or each standard engine itself and to its associated turbo device. In addition the method makes it possible for the engine to be relatively easily insulated, e.g. thermally, from the boiler space of the power plant.

In practice the proportion of the by-passed exhaust gases is with advantage from 8 to 14% of the total exhaust gas flow of the or each engine. With this proportion the advantages resulting from the by-passed exhaust gases are optimised in comparison with the decrease in the output of the turbo device resulting from the decrease in the main flow.

When more than one engine is provided, the proportion of by-passed exhaust gases from each engine may be controlled separately in accordance with the load of the diesel engine in each case. In this way the total efficiency rate of the power plant can be optimised according to the situation in each case. In addition the by-pass flow may be shut off, when the engine is running only at partial load, for instance below an output rate of 75%. Then the engine operates like a standard engine, whereby starting and stopping of the engine is easier than in arrangements according to known techniques.

From the exhaust gas boiler means the exhaust gases are with advantage fed to a utility turbine for producing additional electricity and/or into an exhaust gas boiler for producing additional steam. The additional steam may further be availed of in a steam turbine.

When several diesel engines are provided the majority of by-pass flows, preferably all the by-pass flows, are supplied to the exhaust gas boiler means which in this case is common for the engines in question. An optimum result from the viewpoint of the efficiency rate can be attained by controlling the by-pass flow of each engine in accordance with the load of the engine in question in each case. An exhaust gas boiler means common for all the engines of the power plant for refining steam and at least one steam turbine to be connected thereto provides considerable. savings in the investment costs of the power plant.

According to another aspect of the present invention there is provided a combi power plant as claimed in the ensuing claim 7.

Embodiments of the invention will now be described, by way of example only and with particular reference to the accompanying drawings, in which:
Figure 1 shows schematically an embodiment of a combi power plant according to the invention;
Figure 2 shows schematically one modification of the combi power plant of Figure 1; and
Figure 3 shows schematically another modification of the combi power plant of Figure 1.

The present invention relates to a combi power plant having at least one large diesel engine. The power plant shown in the drawings has, by way of example, two large diesel engines 1,1' producing mechanical energy which is transformed into electricity by means of electric generators 2,2'. Exhaust gas flows 3,3' from the engines are fed through turbo devices 4,4' into first exhaust gas boilers 6,6'. The exhaust gas flows from the turbo devices 4,4' into the exhaust gas boilers 6,6' are indicated by 5,5'. In addition charge air 7,7' is fed back into the engines 1,1' through the turbo charger parts of the turbo devices 4,4'.

The exhaust gas boilers 6,6' are made use of, for the production of steam, by arranging in the exhaust gas boilers steam production circuits 14,14' and 15,15' which are led through a common second exhaust gas boiler, in practice a superheater 11, into a steam turbine 16 operating an electric generator 17, and further from the steam turbine 16 into a condenser 18. In accordance with the basic idea of the invention, when the or each engine is running at full load, or almost full load, for instance above an output rate of 75%, a by-pass or side flow 8,8' is taken from the exhaust gas flow 3,3' of each engine, is passed through a control valve 9,9' and is fed into the common superheater 11 for refining the steam in the steam production circuits 14 and 15 by substantially raising the temperature of the produced steam before feeding it into the steam turbine 16. In this way the efficiency of the steam turbine 16 and, thus also, the total efficiency rate of the power plant can be substantially increased since the side flows 8,8' taken from the exhaust gas flows of the engines are in all situations relatively small relative to the exhaust gas flows 5,5' supplied to the turbo devices 4,4' so that their effect on the efficiency of the turbo devices 4,4' is not very great. It should be especially noted that, by means of the control valve 9,9', each side flow 8,8' may be controlled separately in accordance with the output rate of the engine in question in each case, which allows for flexible operation of the power plant independently of possible fluctuations in the load of individual engines.

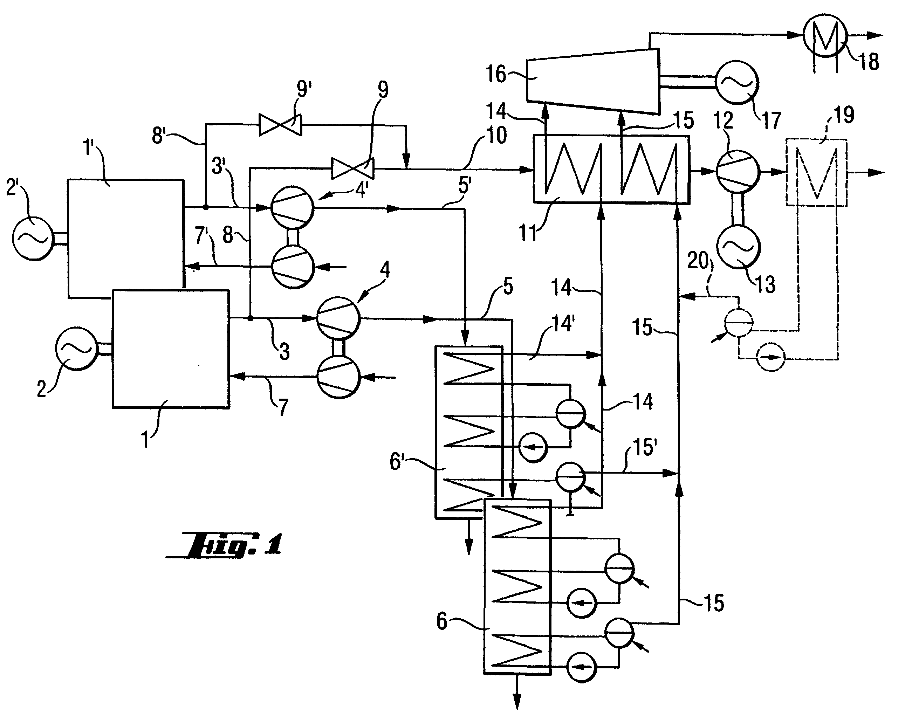

The invention applies to power plants having one or several engines. As is apparent from Figure 1, each engine has its own turbo device 4,4', its own exhaust gas boiler 6,6' downstream of the turbo device 4,4' and, in association with the exhaust gas boilers 6,6', its own separate steam production circuits 14,14' and 15,15', respectively. If there is more than one engine, the superheater 11 and the steam turbine 16 are conveniently common to all the engines which reduces the investment costs of the power plant. In this case, the steam production circuits 14,14' and the steam production circuits 15,15' are preferably joined into two circuits 14 and 15 before being fed into the superheater 11. Similarly the side flows 8,8' are preferably combined to form a common flow 10 leading into the superheater 11.

In the following description some alternative arrangements are described relating to the utilisation of the superheater 11 and are thus applicable to power plants with one or more than one diesel engine.

In the case of Figure 1, exhaust gases are led from the superheater 11 into the utility turbine 12, which operates the electric generator 13. From the utility turbine the exhaust gases may further be led into an exhaust gas boiler 19 for producing additional steam in a circuit 20 to be further fed into the steam production circuit 15.

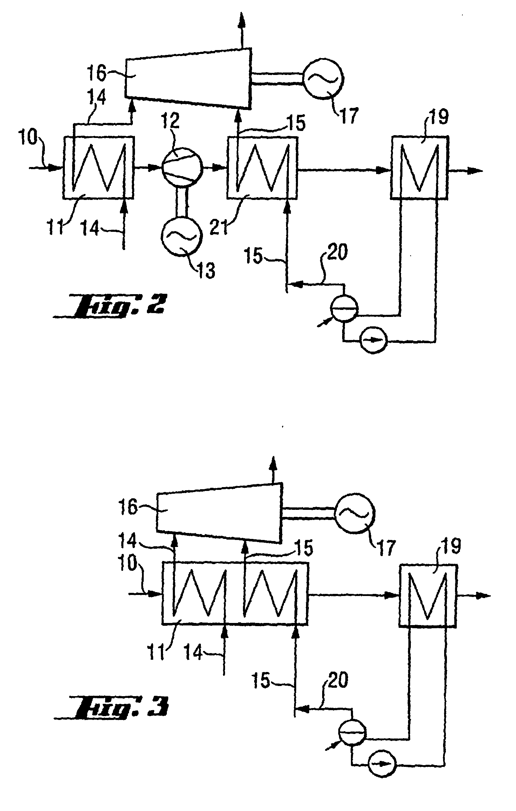

The arrangement of Figure 2 differs from the arrangement of Figure 1 in that in the Figure 2 arrangement a superheater 21 is arranged between the utility turbine 12 and the exhaust gas boiler 19. The steam production circuit 15 is passed through the superheater 21 before being passed into the steam turbine 16. Thus, in this case, the superheater 11 can be considered as being divided into two parts with part of the heat energy of the exhaust gases of the side flow 8 being recovered by means of the circuit 14 upstream of the utility turbine 12 and part of the heat energy being recovered by means of the circuit 15 downstream of the utility turbine 12.

Correspondingly the arrangement of Figure 3 differs from the arrangement of Figure 1 in that in the Figure 3 arrangement the utility turbine 12 between the superheater 11 and the exhaust gas boiler 19 is entirely removed, whereby the heat energy of the exhaust gases is, in this phase, only made use of for the production of additional steam to be further fed into the steam turbine 16.

These different alternative arrangements affect the amount of electricity produced by means of the electric generator 17 relative to the electric generator 13. A still further solution for the production of electricity is to arrange the electric generators 17 and 13 to be on the same shaft. In all cases the effect on the improvement and optimisation of the total efficiency rate of the plant is substantial.

Naturally, the exhaust gas boilers 6,6' and their utilization for the production of steam can in addition be arranged in many different ways. Thus, for instance, there can be one or more steam production circuits depending how much saturated or superheated steam is required to be produced. Similarly, instead of one exhaust gas boiler, it is possible if required to utilize several exhaust gas boilers arranged in succession.

The invention is not restricted to the embodiments shown and described and several modifications are feasible within the scope of the accompanying claims.

## Claims

1. A method of operating a combi power plant including at least one large diesel engine (1,1') provided with a separate turbo device (4,4'), a separate exhaust gas boiler unit (6,6') associated with the or each engine into which exhaust gases from the latter are supplied downstream of the turbo device (4,4') for producing pressurised steam by making use of heat energy in the exhaust gases, exhaust gas boiler means (11) for further heating of the steam produced in the exhaust gas boiler unit(s) (6,6'), and a steam turbine (16) for transforming the produced steam into electricity, **characterised in that**, when the engine or one or more of the engines (1,1') is running at an output rate of over 75%, a proportion of the exhaust gases from the or each engine running at an output rate of over 75% is arranged to by-pass the or the associated turbo device(s) (4,4') and to be supplied to the exhaust gas boiler means in order to refine the steam produced in the exhaust gas boiler unit(s) before the steam is fed into the steam turbine, the by-passed gases for the or each engine running at high output rates being below 20%, preferably below 15%, of the total exhaust gas flow from the or each engine (1,1') in question.

2. A method according to claim 1, **characterised in that** said by-passed exhaust gases are from 8 to 14% of the total exhaust gas flow of the or each engine in question.

3. A method according to claim 1 or 2, **characterised in that** the combi power plant includes more than one large diesel engine and **in that** the amount of the by-passed gases is controlled separately in accordance with the load of each of the diesel engines.

4. A method according to any one of the preceding claims, **characterised in that** when the said engine, or at least one of the said engines, is running only at part load below an output rate of 75%, no exhaust gas associated with the or each engine running at part load is by-passed.

5. A method according to any one of the preceding claims, **characterised in that** exhaust gases from said exhaust gas boiler means (11) are supplied to a utility turbine (12) for producing additional electricity and/or to an exhaust gas boiler (19) for producing additional steam.

6. A method according to any one of the preceding claims, **characterised in that**, when several diesel engines are used, the by-passed exhaust gases from the majority, preferably all, of the diesel engines are supplied to said exhaust gas boiler means (11) which is common for the engines in question.

7. A combi power plant including at least one large diesel engine (1,1') provided with a separate turbo device (4,4'), a separate exhaust pipe (3,3') connecting the or each engine to the, or the associated, turbo device (4,4'), a separate exhaust gas boiler unit (6,6') associated with the or each engine into which exhaust gases from the at least one engine are supplied downstream of the turbo device (4,4') for producing pressurised steam by making use of heat energy in the exhaust gases, exhaust gas boiler means (11) for further heating of the steam produced in the exhaust gas boiler unit(s) (6,6') and a steam turbine (16) for transforming the produced steam into electricity by means of an electric generator (17), **characterised in that** said exhaust gas boiler means (11) is in connection via by-pass means (8,8') with the said exhaust pipe (3,3') of the or each engine upstream of the, or the associated, turbo device (4,4') so that when the or each engine is running at an output rate of over 75% a proportion which is below 20%, preferably below 15%, of the total exhaust gas flow (3,3') of the engine in question, is arranged to be led via said by-pass means (8,8') into said exhaust gas boiler means (11), and **in that** means are provided for leading steam from said gas boiler means (11) to said steam turbine (16).

8. A combi power plant according to claim 7, **characterised in that** said proportion of by-passed exhaust gases is from 8 to 14% of the exhaust gas flow of the or each engine in question.

9. A combi power plant according to claim 7 or 8, **characterised in that** more than one diesel engine is provided and **in that** the plant further includes control means for controlling separately the amount of by-passed exhaust gases for each engine in accordance with the load of the diesel engine (1,1') in each case.

10. A combi power plant according to any one of the claims 7 to 9, **characterised in that** shut off means are provided for shutting off exhaust gases in said by-pass means (8,8') when the or each engine (1,1') is running only at part load below an output rate of 75%.

11. A combi power plant according to any one of claims 7 to 10, **characterised in that** means are provided for leading the exhaust gases from said second exhaust gas boiler unit (11) into a utility turbine (12) for producing additional electricity (13) and/or into an exhaust gas boiler (19) for producing additional steam.

12. A combi power plant according to any one of claims 7 to 11, **characterised in that** it includes several diesel engines (1,1'), the exhaust pipes (3,3') of the majority of which, preferably of all of which, are in connection with said exhaust gas boiler means (11) for leading of said by-pass flows (8,8'), said gas boiler unit means (11) being common for the several engines (1,1').

## Patentansprüche

1. Verfahren zum Betrieb eines Kombikraftwerks mit wenigstens einem großen Dieselmotor (1, 1'), der mit einem getrennten Turbogerät (4, 4') versehen ist, einer getrennten Abgaskesseleinheit (6, 6'), die mit dem oder jedem Motor verbunden ist, die zur Erzeugung von Hochdruckdampf durch Nutzung der Wärmeenergie der Abgase mit Abgasen von letzterem stromabwärts des Turbogeräts (4, 4') gespeist wird, einer Abgaskesseleinrichtung (11) zum weiteren Erhitzen des in der bzw. den Abgaskesseleinheit(en) (6, 6') erzeugten Dampfs und einer Dampfturbine (16) zur Umwandlung des erzeugten Dampfs in Elektrizität, **dadurch gekennzeichnet, dass** ein Anteil der Abgase aus dem oder jedem Motor, der mit einer Ausgangsleistung von mehr als 75 % betrieben wird, an dem bzw. den verbundenen Turbogerät(en) (4, 4') vorbeigelenkt und in die Abgaskesseleinrichtung eingespeist wird, wenn der Motor oder einer oder mehrere der Motoren (1, 1') mit einer Ausgangsleistung von mehr als 75 % betrieben wird bzw. werden, um den in der bzw. den Abgaskesseleinheit(en) erzeugten Dampf zu reinigen, ehe der Dampf in die Dampfturbine eingespeist wird, wobei die umgelenkten Gase des oder jedes Motors mit hoher Ausgangsleistung weniger als 20 %, vorzugsweise weniger als 15 %, des gesamten Abgasdurchflusses des oder jedes fraglichen Motors (1, 1') ausmachen.

2. Verfahren nach Anspruch 1, **dadurch gekennzeichnet, dass** die umgelenkten Abgase zwischen 8 und 14 % des gesamten Abgasdurchflusses des oder jedes fraglichen Motors (1, 1') ausmachen.

3. Verfahren nach Anspruch 1 oder 2, **dadurch gekennzeichnet, dass** das Kombikraftwerk mehr als einen großen Dieselmotor aufweist und dass die Menge der umgelenkten Gase getrennt entsprechend der Last jedes der Dieselmotoren gesteuert wird.

4. Verfahren nach einem der vorstehenden Ansprüche, **dadurch gekennzeichnet, dass** bei Betrieb des Motors oder wenigstens eines der Motoren mit nur einer Teillast unterhalb einer Ausgangsleistung von 75 % keine Abgase, die mit diesem oder jedem mit Teillast betriebenen Motor verbunden sind, umgelenkt werden.

5. Verfahren nach einem der vorstehenden Ansprüche, **dadurch gekennzeichnet, dass** Abgase von der Abgaskesseleinrichtung (11) in eine Stromerzeugungsturbine (12) zur Erzeugung von zusätzlicher Elektrizität und/oder in einen Abgaskessel (19) zur Erzeugung von zusätzlichem Dampf eingespeist werden.

6. Verfahren nach einem der vorstehenden Ansprüche, **dadurch gekennzeichnet, dass** bei Benutzung von mehreren Dieselmotoren die umgelenkten Abgase der Mehrheit der, vorzugsweise aller, Dieselmotoren in die Abgaskesseleinrichtung (11) eingespeist werden, die allen fraglichen Motoren gemeinsam ist.

7. Kombikraftwerk mit wenigstens einem großen Dieselmotor (1, 1'), der mit einem getrennten Turbogerät (4, 4') versehen ist, einer getrennten Abgasleitung (3, 3'), die den oder jeden Motor mit dem oder dem verbundenen Turbogerät (4, 4') verbindet, einer getrennten Abgaskesseleinheit (6, 6'), die mit dem oder jedem Motor verbunden ist, die zur Erzeugung von Hochdruckdampf durch Nutzung der Wärmeenergie der Abgase mit Abgasen von dem wenigstens einen Motor stromabwärts des Turbogeräts (4, 4') gespeist wird, einer Abgaskesseleinrichtung (11) zum weiteren Erhitzen des in der bzw. den Abgaskesseleinheit(en) (6, 6') erzeugten Dampfs und einer Dampfturbine (16) zur Umwandlung des erzeugten Dampfs in Elektrizität mittels eines elektrischen Generators (17), **dadurch gekennzeichnet, dass** die Abgaskesseleinrichtung (11) über eine Umlenkeinrichtung (8, 8') stromaufwärts des oder des verbundenen Turbogeräts (4, 4') mit der Abgasleitung (3, 3') des oder jedes Motors verbunden ist, so dass ein Anteil von weniger als 20 %, vorzugsweise weniger als 15 %, des gesamten Abgasdurchflusses (3, 3') des fraglichen Motors über die Umlenkeinrichtung (8, 8') in die Abgaskesseleinrichtung (11) geführt wird, wenn der oder jeder Motor mit einer Ausgangsleistung von mehr als 75 % betrieben wird, und dass Einrichtungen vorgesehen sind, mit denen der Dampf von der Gaskesseleinrichtung (11) zur Dampfturbine (16) geleitet wird.

8. Kombikraftwerk nach Anspruch 7, **dadurch gekennzeichnet, dass** der Anteil umgelenkter Abgase zwischen 8 und 14 % des Abgasdurchflusses aus dem oder jedem fraglichen Motor beträgt.

9. Kombikraftwerk nach Anspruch 7 oder 8, **dadurch gekennzeichnet, dass** mehr als ein Dieselmotor vorgesehen ist und dass das Kraftwerk weiter Steuereinrichtungen zur getrennten Steuerung der Menge umgelenkter Abgase an jedem Motor entsprechend der jeweiligen Last des Dieselmotors (1, 1') aufweist.

10. Kombikraftwerk nach einem der vorstehenden Ansprüche 7 bis 9, **dadurch gekennzeichnet, dass** Absperreinrichtungen zum Absperren der Abgase in der Umlenkeinrichtung (8, 8'), wenn der oder jeder Motor (1, 1') nur mit einer Teillast unterhalb einer Ausgangsleistung von 75 % betrieben wird, vorgesehen sind.

11. Kombikraftwerk nach einem der vorstehenden Ansprüche 7 bis 10, **dadurch gekennzeichnet, dass** Einrichtungen zum Leiten der Abgase von der zweiten Abgaskesseleinheit (11) zu einer Stromerzeugungsturbine (12) zur Erzeugung von zusätzlicher Elektrizität (13) und/oder zu einem Abgaskessel (19) zur Erzeugung von zusätzlichem Dampf vorgesehen sind.

12. Kombikraftwerk nach einem der vorstehenden Ansprüche 7 bis 11, **dadurch gekennzeichnet, dass** es mehrere Dieselmotoren (1, 1') umfasst, wobei die Abgasleitungen (3, 3') der Mehrheit der, vorzugsweise aller, Motoren mit der Abgaskesseleinrichtung (11) zum Führen der Umlenkdurchflüsse (8, 8') verbunden sind, wobei die Gaskesseleinheitseinrichtung (11) mehreren Motoren (1, 1') gemeinsam ist.

## Revendications

1. Procédé pour faire fonctionner une centrale électrique à cycles combinés comprenant au moins un grand moteur diesel (1, 1') équipé d'un dispositif turbo séparé (4, 4'), une unité chaudière à gaz d'échappements séparée (6, 6') associée au ou à chaque moteur, laquelle chaudière est alimentée par les gaz d'échappement du moteur en aval du dispositif turbo (4, 4') pour produire de la vapeur sous pression en utilisant de l'énergie calorifique dans les gaz d'échappement, un moyen de chaudière à gaz d'échappement (11) pour réchauffage de la vapeur produite dans la ou les unité(s) chaudière(s) à gaz d'échappement (6, 6'), et une turbine à vapeur (16) pour transformer la vapeur produite en électricité, **caractérisé en ce que**, quand le moteur ou un ou plus des moteurs (1, 1') fonctionne à un taux de puissance utile de plus de 75%, une partie des gaz d'échappement du ou de chaque moteur fonctionnant à un taux de puissance utile de plus de 75% est disposée pour contourner le ou les dispositif(s) turbo associé(s) (4, 4') et alimenter le moyen de chaudière à gaz d'échappement de façon à affiner la vapeur produite dans la (les) unité(s) chaudière(s) à gaz d'échappement avant que la turbine à vapeur soit alimentée en cette vapeur, les gaz dérivés du ou de chaque moteur fonctionnant à fort taux de puissance utile étant moins de 20%, de préférence moins de 15% du débit total de gaz d'échappement du ou de chaque moteur (1, 1') en question.

2. Procédé selon la revendication 1, **caractérisé en ce que** lesdits gaz d'échappement dérivés sont de 8 à 14% du débit total de gaz d'échappement du ou de chaque moteur en question.

3. Procédé selon la revendication 1 ou 2, **caractérisé en ce que** la centrale électrique à cycles combinés comprend plus qu'un grand moteur diesel et **en ce que** la quantité des gaz dérivés est réglée séparément en fonction de la charge de chacun des moteurs diesel.

4. Procédé selon une quelconque des revendications précédentes, **caractérisé en ce que** quand ledit moteur ou au moins un desdits moteurs fonctionne seulement à charge partielle, inférieure à un taux de puissance utile de 75%, aucun gaz d'échappement associé à ce ou chaque moteur fonctionnant à charge partielle n'est dérivé.

5. Procédé selon une quelconque des revendications précédentes, **caractérisé en ce que** des gaz d'échappement dudit moyen de chaudière à gaz d'échappement (11) sont fournis à une turbine utilitaire (12) pour produire de l'électricité additionnelle et/ou à une chaudière à gaz d'échappement (19) pour produire de la vapeur additionnelle.

6. Procédé selon une quelconque des revendications précédentes, **caractérisé en ce que**, quand plusieurs moteurs diesel sont utilisés, les gaz d'échappement dérivés de la majorité des, de préférence tous les, moteurs diesel sont fournis audit moyen de chaudière à gaz d'échappement (11) qui est commun aux moteurs en question.

7. Centrale électrique à cycles combinés comprenant au moins un grand moteur diesel (1, 1') équipé d'un dispositif turbo séparé (4, 4'), d'un tuyau d'échappement séparé (3, 3') raccordant le ou chaque moteur au dispositif turbo ou au dispositif turbo associé (4, 4'), d'une unité chaudière à gaz d'échappements séparée (6, 6') associée au ou à chaque moteur, laquelle chaudière est alimentée par les gaz d'échappement d'au moins un moteur en aval du dispositif turbo (4, 4') pour produire de la vapeur sous pression en utilisant de l'énergie calorifique dans les gaz d'échappement, un moyen de chaudière à gaz d'échappement (11) pour réchauffage de la vapeur produite dans la ou les unité(s) chaudière(s) à gaz d'échappement (6, 6'), et une turbine à vapeur (16) pour transformer la vapeur produite en électricité au moyen d'un générateur électrique (17), **caractérisée en ce que** ledit moyen de chaudière à gaz d'échappement (11) est raccordé, par un moyen de dérivation (8, 8'), audit tuyau d'échappement (3, 3') du ou de chaque moteur en amont du dispositif turbo ou du dispositif turbo associé (4, 4'), de façon que quand le moteur ou chaque moteur fonctionne à un taux de puissance utile de plus de 75%, une partie qui est inférieure à 20%, de préférence inférieure à 15%, du débit total de gaz d'échappement (3, 3') du moteur en question est disposée pour être conduite par ledit moyen de dérivation (8, 8') dans ledit moyen de chaudière à gaz d'échappement (11), et **en ce que** des moyens sont prévus pour conduire de la vapeur dudit moyen de chaudière à gaz (11) à ladite turbine à vapeur (16).

8. Centrale électrique à cycles combinés selon la revendication 7, **caractérisée en ce que** ladite partie des gaz d'échappement dérivés est de 8 à 14% du débit total de gaz d'échappement du ou de chaque moteur en question.

9. Centrale électrique à cycles combinés selon la revendication 7 ou 8, **caractérisée en ce que** plus qu'un moteur diesel est prévu et que la centrale comprend en outre un moyen de commande pour régler séparément la quantité de gaz d'échappement dérivée pour chaque moteur, en fonction de la charge du moteur diesel (1, 1') dans chaque cas.

10. Centrale électrique à cycles combinés selon une quelconque des revendications 7 à 9, **caractérisée en ce que** des moyens d'isolement sont prévus pour couper les gaz d'échappement dans ledit moyen de dérivation (8, 8') quand le ou chaque moteur (1, 1') fonctionne seulement à charge partielle inférieure à un taux de puissance utile de 75%.

11. Centrale électrique à cycles combinés selon une quelconque des revendications 7 à 10, **caractérisée en ce que** des moyens sont prévus pour conduire les gaz d'échappement de ladite seconde unité chaudière à gaz d'échappement (11) dans une turbine utilitaire (12) pour produire de l'électricité additionnelle (13) et/ou dans une chaudière à gaz d'échappement (19) pour produire de la vapeur additionnelle.

12. Centrale électrique à cycles combinés selon une quelconque des revendications 7 à 11, **caractérisée en ce qu'**elle comprend différents moteurs diesel (1, 1'), les tuyaux d'échappement (3, 3') de la majorité desquels, de préférence de tous, étant raccordés audit moyen de chaudière à gaz d'échappement (11) pour conduire lesdits écoulements dérivés (8, 8'), ledit moyen d'unité chaudière à gaz d'échappement (11) étant commun pour les différents moteurs (1, 1').
